# EUROPÄISCHE PATENTSCHRIFT

(11) **EP 0 612 332 B1**
(45) Veröffentlichungstag und Bekanntmachung des Hinweises auf die Patenterteilung: **07.02.1996**
(21) Anmeldenummer: 92923338.5
(22) Anmeldetag: 06.11.1992
(51) Int. Cl.: C08K 3/08, B32B 27/20

(54) **ANORGANISCHE FÜLLSTOFFE ENTHALTENDE THERMOPLASTISCHE KUNSTSTOFFOLIE, ANORGANISCHE FÜLLSTOFFE ENTHALTENDER METALL-KUNSTSTOFF-VERBUND SOWIE VERFAHREN ZUR HERSTELLUNG**
THERMOPLASTIC SHEET CONTAINING INORGANIC FILLERS, METAL/PLASTIC COMPOSITES CONTAINING INORGANIC FILLERS, AND METHODS OF PRODUCING THE SHEET AND COMPOSITES
FEUILLE DE MATIERE PLASTIQUE THERMOPLASTIQUE RENFERMANT DES CHARGES INORGANIQUES, COMPOSITES METAL-MATIERE PLASTIQUE RENFERMANT DES CHARGES INORGANIQUES ET LEUR PROCEDE DE FABRICATION

(30) Priorität: 12.11.1991 DE 4137139
(43) Veröffentlichungstag der Anmeldung: 31.08.1994
(73) Patentinhaber: BASF Lacke + Farben Aktiengesellschaft, D-48136 Münster (DE)
(72) Erfinder: KRAUSE, Siegfried, D-4400 Münster (DE); KIRIAZIS, Leonidas, D-4400 Münster (DE)
(86) Internationale Anmeldenummer: EP9202546
(87) Internationale Veröffentlichungsnummer: WO9310174

(56) Entgegenhaltungen:
- EP-A- 0 199 228
- CA-A- 1 043 931
- GB-A- 1 408 981
- GB-A- 1 598 724

## Beschreibung

Die vorliegende Erfindung betrifft anorganische Füllstoffe enthaltende Metall-Kunststoff-Verbunde sowie Verfahren zu deren Herstellung.

Zur Herstellung einer Dose oder eines Verschlusses für den Einsatz als Verpackungsmaterial, insbesondere für die Verpackung von Lebensmitteln, werden Bleche aus Weißblech, chromatiertem Stahl wie ECCS (electrolytic chromium-coated steel) und Aluminium in Tafel- oder Bandform beschichtet. Die Lackschicht wirkt als Schutzschicht, um das Metall vor dem Angriff des Füllgutes und daraus resultierender Korrosion einerseits zu schützen und um andererseits eine Beeinflussung des Füllgutes durch Korrosionsprodukte des Metalles zu verhindern. Selbstverständlich darf es auch durch die Lackschicht selbst, etwa durch herausgelöste Lackbestandteile, zu keiner Beeinflussung bzw. Beeinträchtigung des Füllgutes kommen, weder bei der im Anschluß an die Abfüllung durchgeführte Sterilisierung des Füllgutes noch bei der anschließenden Lagerung der verpackten Güter, insbesondere Lebensmittel.

Weiterhin müssen die Lacke derart aufgebaut sein, daß sie den bei der Weiterverarbeitung der beschichteten Bleche zu Dosen oder Verschlüssen auftretenden mechanischen Beanspruchungen, etwa beim Verformen, Stanzen, Bördeln, Sicken u.ä., standhalten.

Als vorteilhaftes Verfahren für die Beschichtung von Blechen, die insbesondere zur Herstellung von Lebensmittelverpackungen eingesetzt werden, hat sich die Folienbeschichtung von Metallblechen erwiesen. So ist beispielsweise in der DE-A-3128641 ein Verfahren zur Herstellung von Laminaten für Lebensmittelverpackungen beschrieben, bei dem das Metallblech einer Stärke von 5 µm bis 1 mm und ein thermoplastischer Harzfilm aus Polyolefinen, Polyamiden, Polyestern, PVC, PVDC oder Polycarbonaten zusammen mit einem zwischen diesen Schichten angeordneten Klebstoff und einem Haftvermittlerschicht auf Basis eines carboxylgruppenhaltigen Polyolefins auf Temperaturen oberhalb des Schmelzpunktes des Klebstoffes aufgeheizt und dann unter Anwendung von Druck zusammen abgekühlt werden, wodurch der Metall-Kunststoff-Verbund hergestellt wird.

Weiterhin sind auch aus der DE-A-2912023, der GB-A-2027391 und der EP-B-31701 Laminate und aus diesen Laminaten hergestellte Lebensmittelverpackungsbehälter, insbesondere Beutel, bekannt.

Aus der EP-A-4633 sind opake Folien aus thermoplastischem, organischem Kunststoff bekannt, die durch biaxiales Strecken orientiert sind und 1 bis 25 Gew.-%, bezogen auf das Gewicht des polymeren Kunststoffs, anorganische Teilchen, wie z.B. Titandioxid, Calciumcarbonat und Siliciumdioxid, enthalten. Die anorganischen Teilchen führen zu dem opaken Aussehen der Kunststoffolien.

Die EP-A-199 228 schließlich betrifft Verbundfolien, die zwei mit Klebstoff verbundene Kunststoffilme enthalten, wobei mindestens einer der beiden Filme an seiner Innenfläche mit einer Metallschicht versehen ist und wobei einer der beiden Kunststoffilme ein opakes Aussehen hat durch Mikrohohlräume im Film, die durch anorganische Füllstoffe, wie Sulfate, Carbonate, Silicate, Oxide gebildet werden. Die Verbundfolie wird empfohlen zur Verpackung von oxidationsempfindlichen Lebens- und Genußmitteln. Der opake Kunststoffilm, der im wesentlichen aus Kunststoff als Hauptkomponente und Füllstoff besteht, wird biaxial gestreckt. Der transparente Kunststoffilm wird ebenfalls bevorzugt gestreckt.

Diese Kunststoffolien haben in nicht-biaxial-gestrecktem Zustand schlechte Barriere-Eigenschaften, d.h. die Kunststoffolien sind Wasserdampf-, Säure- und allgemein gasdurchlässig. Bei der Sterilisation von Konservendosen treten infolgedessen unerwünschte Korrosionserscheinungen auf, z.B. sichtbare Metallsulfidbildungen an der Dose.

Die der vorliegenden Erfindung zugrunde liegende Aufgabe bestand darin, Metall-Kunststoff-Verbunde zu entwickeln, die zur Verpackung von oxidationsempfindlichen Lebensmitteln geeignet sind und wobei die Kunststoffe nicht unbedingt biaxial gestreckt werden müssen, um gute Barriere-Eigenschaften zu erreichen. Die Metall-Kunststoff-Verbunde sollten ausgezeichnete Barriere-Eigenschaften aufweisen, vor allem hinsichtlich UV-Durchlässigkeit, Wasserdampf-Durchlässigkeit und Gasdurchlässigkeit sowie insbesondere Sulfiddurchlässigkeit.

Die Aufgabe wird überraschenderweise gelöst durch anorganische Füllstoffe enthaltende Metall-Kunststoff-Verbunde, in denen mit einem Metallblech einer Stärke von 0,04 bis 1 mm verbundene thermoplastische Kunststoffolien aus Polyolefinen, Polyamiden, Polyestern, Polyvinylchlorid, Polyvinylidenchlorid, Polyurethanen oder Polycarbonaten mindestens 0,1 Gew.-%, vorzugsweise 0,5 bis 6 Gew.-%, bezogen auf das Gesamtgewicht der Mischung von Kunststoff und Füllstoff, eines oder mehrerer metallischer Pulver, ausgewählt aus Aluminiumpulver, Magnesiumpulver, Zinkpulver und Manganpulver, enthalten.

Die metallischen Pulver können aber auch in der Haftvermittlerschicht oder in der zwischen der Kunststoffolie und dem Metallblech angeordneten Klebeschicht enthalten sein. So betrifft die vorliegende Erfindung auch Metall-Kunststoff-Verbunde, in denen eine eine thermoplastische Kunststoffolie aus Polyolefinen, Polyamiden, Polyestern, Polyvinylchlorid, Polyvinylidenchlorid, Polyurethanen oder Polycarbonaten mit einem Metallblech einer Stärke von 0,04 bis 1 mm verbindende Haftvermittlerschicht mindestens 0,1 Gew.-%, bevorzugt 0,5 bis 6 Gew.-%, bezogen auf das Gesamtgewicht der Mischung von Haftvermittler und Füllstoff, eines oder mehrerer der zuvor genannten metallischen Pulver enthält, wobei zur Ausbildung der Haftvermittlerschicht Copolymere, Terpolymere, Pfropfcopolymere oder Ionomere verwendet werden, die Carboxylgruppen oder Anhydridgruppen oder Gruppen, die zu Carboxylgruppen hydrolisierbar sind, aufweisen oder wobei zur Ausbildung der Haftvermittlerschicht Polyurethane verwendet werden. Weiterhin betrifft die vorliegende Erfindung Metall-Kunststoff-Verbunde, in denen eine zwischen einem Metallblech einer Stärke von 0,04 bis 1 mm und einer Kunststoffolie aus Polyolefinen, Polyamiden, Polyestern, Polyvinylchlorid, Polyvinylidenchlorid, Polyurethanen oder Polycarbonaten angeordnete Klebeschicht mindestens 0,1 Gew.-%, bevorzugt 0,5 bis 6 Gew.-%, bezogen auf das Gesamtgewicht der Mischung von Füllstoff und dem Festkörpergewicht der Klebeschicht, der zuvor genannten metallischen Pulver enthält.

Die mittlere Teilchengröße der Metallpulver liegt bevorzugt im Bereich von 5 bis 20 µm. Bevorzugt wird als Metallpulver Aluminiumpulver eingesetzt. Ein geeignetes Al-Pulver ist beispielsweise unter der Bezeichnung "Aluminiumpulver Glanzschliff Lotos Vollton" erhältlich (Eckart-Werke).

Zur Herstellung der beschichteten Metallbleche geeignet sind Bleche einer Stärke von 0,04 bis 1 mm aus Schwarzblech, Weißblech, Aluminium und verschiedenen Eisenlegierungen, die ggf. mit einer Passivierungsschicht auf Basis von Nickel-, Chrom- und Zinkverbindungen versehen sind.

Die erfindungsgemäß als Deckschicht verwendeten thermoplastischen Harzfolien oder -filme umfassen Polyolefine, Polyamide, Polyester, Polyvinylchlorid, Polyvinylidenchlorid, Polyurethane und Polycarbonate jeweils in Form einer Folie oder eines Films. Sie umfassen auch zusammengesetzte Folien und Filme (Verbundfolie und -filme), die beispielsweise erhalten werden durch gemeinsames Extrudieren von mindestens zwei der obengenannten Polymeren. Die bevorzugte thermoplastische Folie oder der bevorzugte thermoplastische Film, die (der) die innerste Schicht (dies ist die mit den Füllgütern in Kontakt stehende Schicht) der Metall-Verbunde darstellt, umfaßt bevorzugt eine Folie oder einen Film aus einem Polyolefin, Polyester oder Polyamid. Derartige Folien und Filme sind bekannt und in eine Vielzahl auf dem Markt erhältlich.

Derartige Polyolefinfolien werden nach bekannten Verfahren (Blasverfahren, Chill-roll Verfahren etc.) aus Granulaten von Homopolymeren des Ethylens und Propylens sowie Copolymeren gefertigt. Zu nennen sind Polyethylen niedriger Dichte (PE-LD), mittlerer Dichte (PE-MD), hoher Dichte (PE-HD), linear low und linear very low density Polyethylen (PE-LLD, PE-VLD), Polypropylen, dessen Copolymere mit Ethylen sowie die Copolymeren aus Ethylens mit einem oder mehrerer Comonomeren aus den Gruppen der Vinylester, Vinylalkylether, ungesättigten Mono- und Dicarbonsäuren, deren Salzen, Anhydriden und Estern.

Diese Polyolefine sind beispielsweise unter den folgenden Markennamen im Handel erhältlich:

Escorene®, Lupolen®, Lotader®, Lacqtene®, Orevac®, Lucalen®, Dowlex®, Primacor®, Surlyn®, Admer®, Novatec®, Sclair®, Stamylan® u.a.

Beispiele für als Deckschicht geeignete Polyamide sind Polyamid 6 (Polyamid hergestellt aus ε-Aminocapronsäure), Polyamid 6,6 (Polyamid hergestellt aus Hexamethylendiamin und Sebacinsäure), Polyamid 66,6 (Mischpolyamid, das aus Polyamid 6 und Polyamid 6,6 besteht), Polyamid 11 (Polyamid hergestellt aus ω-Aminoundecansäure) und Polyamid 12 (Polyamid hergestellt aus ω-Aminolaurinsäure oder aus Lauryllactam). Beispiele für Handelsprodukte sind Grilon®, Sniamid® und Ultramid®.

Bevorzugt eingesetzte Polyester sind Polyethylenterephthalat, Polybutylenterephthalat sowie Polyester auf Basis von Terephthalsäure, Ethylen- und Butylenglykol. Geeignet sind aber auch andere Polyester auf Basis von Terephthalsäure, Isophthalsäure und Phthalsäure und verschiedener Polyole wie z.B. Polyethylenglykol und Polytetramethylenglykole unterschiedlichen Polymerisationsgrades.

Beispiele für geeignete Handelsprodukte sind Hostaphan®, Melinex® und Hostadur®, Ultradur®.

Als Beispiel für ein geeignetes Handelsprodukt auf Polyurethanbasis sei Elastolan® der Firma BASF AG genannt.

Unter Haftvermittlern sollen im Gegensatz zu Klebstoffen feste haftvermittelnde Kunststoffe verstanden werden, die zusammen mit dem thermoplastischen Kunststoff coextrudiert werden und auf der Innenseite des coextrudierten Kunststoffilms zu einer Haftvermittler schicht ausgebildet werden.

Als Haftvermittler können sowohl Copolymere, Terpolymere, Pfropfcopolymere und Ionomere sein, mit der Maßgabe, daß sie Carboxyl- oder Anhydridgruppen oder Gruppen, die zu Carboxylgruppen hydrolysierbar sind, aufweisen und daß der Schmelzindex der Polymeren gemessen bei 190°C und einer Belastung von 2,16 kg zwischen 0,1 und 30 g/10 min, bevorzugt zwischen 0,2 und 25 g/10 min und besonders bevorzugt zwischen 0,5 und 20 g/10 min liegt.

Geeignete Co- bzw. Terpolymere sind herstellbar durch Copolymerisation von Ethylen mit α,β-ungesättigten Carbonsäuren wie z.B. Acrylsäure, Methacrylsäure, Itaconsäure, Crotonsäure, Isocrotonsäure, Maleinsäure und Fumarsäure, den entsprechenden Anhydriden oder den entsprechenden Estern oder Halbestern mit 1 bis 8 C-Atomen im Alkoholrest wie z.B. die Methyl-, Ethyl-, Propyl-, Butyl-, Pentyl-, Hexyl-, Cyclohexyl-, Heptyl-, Octyl- und 2-Ethylhexylester der aufgeführten Säuren. Ebenfalls einsetzbar sind auch die entsprechenden Salze der aufgeführten Carbonsäuren, etwa die Natrium-, Kalium-, Lithium-, Magnesium-, Calcium-, Zink- und Ammoniumsalze. Bevorzugt eingesetzt werden die Carbonsäuren und ihre Anhydride.

Weiterhin können bei der Copolymerisation noch weitere, mit Ethylen und den ungesättigten Carbonylverbindungen copolymerisierbare Monomere eingesetzt werden. Geeignet sind beispielsweise Alphaolefine mit 3 bis 10 C-Atomen, Vinylacetat und Vinylpropionat.

Die Mengen der eingesetzten Monomeren werden dabei so gewählt, daß das entsprechende Polymer einen Carboxylgruppengehalt von 0,1 bis 30 Gew.-%, bevorzugt 2 bis 20 Gew.-%, aufweist und daß der Gehalt an Ethyleneinheiten im Polymer bis zu 99,9 Gew.-%, bevorzugt zwischen 75 und 95 Gew.-%, beträgt.

Geeignete Pfropfcopolymere sind herstellbar durch Pfropfung von mindestens einem Polymeren aus der Gruppe der Polyolefine mit bis 10 Gew.-%, bevorzugt bis zu 5 Gew-%, bezogen auf das Gesamtgewicht der Monomeren, mindestens eines Monomeren aus der Gruppe der α,β-ungesättigten Carbonsäuren, deren Anhydride, deren Estern oder Salzen in Gegenwart oder Abwesenheit von Peroxiden. Beispiele von geeigneten Polyolefinen sind die bereits bei der Beschreibung der Deckschichten dieser Beschreibung aufgeführten Polyolefine. Beispiele für geeignete Carbonylverbindungen sind die oben bei der Beschreibung der Haftvermittler auf Copolymerbasis aufgeführten Carbonylverbindungen.

Die als Haftvermittlerschicht eingesetzten Ionomeren sind herstellbar durch die bereits oben beschriebene Copolymerisation von Ethylen und ggf. weiteren Monomeren mit Salzen α,β-ungesättigten Carbonsäuren oder durch partielle Neutralisation von den bereits oben beschriebenen carbonsäurehaltigen Co-, Ter- und Pfropfpolymeren mit Salzen, Oxiden und Hydroxiden von Natrium, Kalium, Lithium, Magnesium, Calcium, Zink und Ammonium. Die Neutralisation kann in der Schmelze oder in der Lösung durchgeführt werden. Die Menge an basischer Verbindung wird dabei so gewählt, daß der Neutralisationsgrad des Polymers zwischen 0,1 und 99 %, bevorzugt zwischen 0,1 und 75 % und ganz besonders bevorzugt zwischen 0,1 und 40 % liegt.

Es kommen auch Haftvermittler auf Polyurethanbasis in Frage.

Sowohl die Haftvermittlerschicht als auch die thermoplastische Kunststoffschicht können noch übliche Additive wie z.B. innere und äußere Gleitmittel, Antiblockmittel, Stabilisatoren, Antioxidantien, Pigmente, Kristallisationshilfsmittel und dergleichen enthalten. Diese Additive werden in den für die Herstellung, Verarbeitung, Konfektionierung und Anwendung notwendigen Mengen in Form von Pulver, Puder, Perlen oder einem direkt in dem entsprechenden Polymer eingearbeiteten Konzentrat eingesetzt. Nähere Angaben zu den üblicherweise eingesetzten Mengen und Beispiele für geeignete Additive sind beispielsweise dem Gächter-Müller, Kunststoffadditve, Carl-Hanser Verlag zu entnehmen. Bevorzugt werden diese Additive in die thermoplastische Kunststoffschicht eingearbeitet.

Die ggf. verwendeten Klebstoffe werden vorzugsweise durch Auftragen aus Lösungen oder Dispersionen in Wasser oder organischen Lösungsmitteln aufgebracht. Die Lösungen oder die Dispersionen haben in der Regel einen Klebstoffgehalt von etwa 5 bis 60 Gew.-%. Die aufgebrachte Klebstoffmenge beträgt in der Regel etwa 1 bis 10 g/m Fläche. Besonders geeignete Klebstoffe sind die synthetischen Klebstoffe, bestehend aus thermoplastischen Harzen wie Celluloseester, Celluloseether, Alkyl- oder Acrylester, Polyamide, Polyurethane und Polyester, aus wärmehärtenden Harzen wie Epoxy harzen, Harnstoff/Formaldehydharzen, Phenol/Formalde hydharzen und Melamin-Formaldehydharzen oder aus synthetischen Kautschuken.

Die vorliegende Erfindung betrifft auch mehrere Verfahren zur Herstellung der erfindungsgemäßen Metall-Kunststoff-Verbunde.

So ist ein Herstellungsverfahren dadurch gekennzeichnet, daß die Mischung aus thermoplastischem Kunststoff und metallischem Pulver extrudiert wird und die entstandene Kunststoffolie mittels einer Klebeschicht auf das Metallblech aufkaschiert wird. Weiterhin kann aber auch die Mischung aus thermoplastischem Kunststoff und metallischem Pulver zusammen mit einem Haftvermittler coextrudiert werden. Bei diesem Vorgang wird auf der Innenseite des Metallpulver enthaltenden Kunststoffilms eine Haftvermittlerschicht ausgebildet. Anschließend wird die erhaltene Kunstoffolie auf ein Metallblech auflaminiert.

Darüber hinaus ist aber auch ein Verfahren zur Herstellung der Metall-Kunststoff-Verbunde möglich, bei dem der thermoplastische Kunststoff zusammen mit einer Mischung aus Haftvermittler und metallischem Pulver coextrudiert wird, ein Metallblech aufgeheizt wird und die Kunstoffolie auf das Metallblech auflaminiert wird.

Schließlich betrifft die vorliegende Erfindung ein Herstellungsverfahren von Metall-Kunststoff-Verbunden, bei dem die durch Extrusion erhaltene Kunststoffolie mittels einer Klebeschicht, welche das Metallpulver enthält, auf das Metallblech aufkaschiert wird.

Die Verfahren zur Herstellung der mit einer Kunststoffolie beschichteten Metallbleche sind allgemein bekannt, so daß an dieser Stelle darauf nicht näher eingegangen werden muß.

Bezüglich geeigneter Klebestoffe und Haftvermittler wird auf die zuvor beschriebenen Klebestoffe und Haftvermittler verwiesen.

Die erfindungsgemäßen Metall-Kunststoff-Verbunde weisen auch ohne biaxiale Orientierung der Kunststoffilme hervorragende Barriere-Eigenschaften, d.h. eine geringe Lichtdurchlässigkeit, eine geringe Wasserdampf- und Gasdurchlässigkeit auf. Sie sind daher hervorragend geeignet für die Verpackung von Lebens- und Genußmitteln, wobei sie bevorzugt zur Verpackung oxidationsempfindlicher Lebens- und Genußmittel verwendet werden.

Nachfolgend wird die Erfindung anhand von Ausführungsbeispielen näher erläutert:

### Beispiel 1

Polypropylen-Granulat (Novolen 3225 MCX der BASF AG) wird mit 0,1, 0,5, 1, 2, 4, 6, 8 und 10 Gew.-% Aluminiumpulver, bezogen auf das Gesamtgewicht von Polypropylen und Al-Pulver, vermischt (Vorsicht: Explosionsgefahr) und bei ca. 180°C Walzentemperatur (Zweiwalzengerät) aufgeschmolzen und homogenisiert. Die Mischungen werden zu Folien verpreßt und mittels eines 2K-Polyurethan-Klebers oder eines Haftvermittlers (Haftvermittler auf Basis mit Maleinsäureanhydrid gepfropf. Polypropylen) auf Weißblech auflaminiert und zu Konservendosen oder Deckeln gestanzt.

Die Dicke der Folien wurde variiert und beträgt 30, 50, 100, 200 µm.

Es werden mehrere Konservendosen bzw. Deckel, die ein- oder beidseitig mit Folie beschichtet sind, hergestellt und mit verschiedenen Lösungen, wie z.B. Nacl-, Essig-, Nacl- und Essig-, Milchsäure-Lösung, Tierfutter (Shappi, Sheba), Tomatenmark u.ä. gefüllt und verschlossen. Die Konservendosen werden bei 121°C 30 Minuten lang oder bei 130°C 1 Stunde lang sterilisiert, geöffnet und anschließend wird auf Marmorierung (Schwarzfärbung des Metalls) bzw. werden eventuell auftretende Korrosionserscheinungen untersucht.

Ergebnis: Bei allen Versuchen wird keine Marmorierung bzw. werden keine Korrosionserscheinungen festgestellt, während bei den entsprechenden Versuchen ohne Aluminiumpulver deutliche Marmorierungserscheinungen erkennbar sind.

### Beispiel 2:

Es wird verfahren wie in Beispiel 1 mit dem Unterschied, daß das Aluminiumpulver nicht mit dem Polypropylen-Granulat vermischt wird, sondern mit Hilfe eines automatischen Pulverdosierers der Polypropylenschmelze während der Extrusion zudosiert wird. Bei dieser Verfahrensweise ist eine Explosion ausgeschlossen. Die Ergebnisse bezüglich Marmorierung bzw. Korrosionserscheinungen entsprechen den Ergebnissen aus Beispiel 1.

### Beispiel 3:

Es wird verfahren wie in Beispiel 1 mit dem Unterschied, daß an Stelle des Polypropylens Novolen 3225 MCX der BASF AG eine 1 : 1-Mischung aus dem Polypropylen Novolen 1100 und Novolen 1125 (beide von der Firma BASF AG) verwendet wird.

Die Ergebnisse hinsichtlich Marmorierung bzw. Korrosion entsprechen den Ergebnissen aus Beispiel 1 und 2.

### Beispiel 4

Es werden Monofolien und aus mehreren Schichten bestehende Coexfolien hergestellt, wobei als Trägermaterial das Polyethylen Lupolen® (BASF AG), das Polypropylen Novolen® 1100 und 1125 (1 : 1; Fa. BASF AG), das Polyamid Ultramid® (BASF AG), des Polybutylenterephthalat Ultradur® B (BASF AG) sowie Mischungen bei den Coexfolien eingesetzt werden. Als Haftvermittler wird das unter der Handelsbezeichnung Lucalen® (BASF AG) bekannte Material zusammen mit dem Trägermaterial coextrudiert. Aluminiumpulver wird in Anteilen von 0,1, 0,5, 1,0, 2,0, 4,0, 6,0 und 8 Gew.-%, bezogen auf das Gesamtgewicht von Trägermaterial und Aluminiumpulver bzw. von Haftvermittler und Aluminiumpulver, sowohl in die Trägerschichten als auch in die Haftvermittler eingearbeitet. Die auf Weißblech auflaminierten Folien werden jeweils zu Konservendosen gestanzt. Die Konservendosen werden mit den in Beispiel 1 genannten Lösungen gefüllt und verschlossen. Die Dosen wurden bei 121°C 30 Minuten lang oder bei 130°C 1 Stunde lang sterilisiert, geöffnet und auf Marmorierung bzw. Korrosionserscheinungen untersucht.

Ergebnis: Bei allen Versuchen wird keine Marmorierung bzw. werden keine Korrosionserscheinungen festgestellt, während bei entsprechenden Versuchen ohne Aluminium deutliche Marmorierungserscheinungen feststellbar sind.

## Patentansprüche

1. Anorganische Füllstoffe enthaltender Metall-Kunststoff-Verbund, in dem eine mit einem Metallblech einer Stärke von 0,04 bis 1 mm verbundene thermoplastische Kunststoffolie aus Polyolefinen, Polyamiden, Polyestern, Polyvinylchlorid, Polyvinylidenchlorid, Polyurethanen oder Polycarbonaten mindestens 0,1 Gew.-%, bevorzugt 0,5 bis 6 Gew.-%, bezogen auf das Gesamtgewicht der Mischung von thermoplastischem Kunststoff und Füllstoff, eines oder mehrerer metallischer Pulver, ausgewählt aus Aluminiumpulver, Magnesiumpulver, Zinkpulver und Manganpulver, enthält.

2. Anorganische Füllstoffe enthaltender Metall-Kunststoff-Verbund, in dem eine eine thermoplastische Kunststoffolie aus Polyolefinen, Polyamiden, Polyestern, Polyvinylchlorid, Polyvinylidenchlorid, Polyurethanen oder Polycarbonaten mit einem Metallblech einer Stärke von 0,04 bis 1 mm verbindende Haftvermittlerschicht mindestens 0,1 Gew.-%, bevozugt 0,5 bis 6 Gew.-%, bezogen auf das Gesamtgewicht der Mischung von Haftvermittler und Füllstoff, eines oder mehrerer metallischer Pulver, ausgewählt aus Aluminiumpulver, Magnesiumpulver, Zinkpulver und Manganpulver, enthält, wobei zur Ausbildung der Haftvermittlerschicht Copolymere, Terpolymere, Pfropfcopolymere oder Ionomere verwendet werden, die Carboxylgruppen oder Anhydridgruppen oder Gruppen, die zu Carboxylgruppen hydrolisierbar sind, aufweisen, oder wobei zur Ausbildung der Haftvermittlerschicht Polyurethane verwendet werden.

3. Anorganische Füllstoffe enthaltender Metall-Kunststoff-Verbund, in dem eine zwischen einem Metallblech einer Stärke von 0,04 bis 1 mm und einer Kunststoffolie aus Polyolefinen, Polyamiden, Polyestern, Polyvinylchlorid, Polyvinylidenchlorid, Polyurethanen oder Polycarbonaten angeordnete Klebeschicht mindestens 0,1 Gew.-%, bevorzugt 0,5 bis 6 Gew.-%, bezogen auf das Gesamtgewicht der Mischung von Füllstoff und dem Festkörpergewicht der Klebeschicht, eines oder mehrerer metallischer Pulver, ausgewählt aus Aluminiumpulver, Magnesiumpulver, Zinkpulver und Manganpulver, enthält.

4. Metall-Kunststoff-Verbund nach Anspruch 1, 2 oder 3, in dem die mittlere Teilchengröße des metallischen Pulvers im Bereich von 5 bis 20 µm liegt.

5. Verfahren zur Herstellung des Metall-Kunststoff-Verbundes nach Anspruch 1 oder 4, in dem entweder die Mischung aus thermoplastischem Kunststoff und metallischem Pulver extrudiert wird und die erhaltene Kunststoffolie mittels einer Klebeschicht auf das Metallblech aufkaschiert wird oder die Mischung aus thermoplastischem Kunststoff und metallischem Pulver zusammen mit einem Haftvermittler coextrudiert wird, das Metallblech aufgeheizt wird und die Kunststoffolie auf das Metallblech auflaminiert wird.

6. Verfahren zur Herstellung des Metall-Kunststoff-Verbundes nach Anspruch 2 oder 4, in dem ein thermoplastischer Kunststoff zusammen mit einer Mischung aus Haftvermittler und metallischem Pulver coextrudiert wird, das Metallblech aufgeheizt wird und die Kunststoffolie auf das Metallblech auflaminiert wird.

7. Verfahren zur Herstellung des Metall-Kunststoff-Verbundes nach Anspruch 3 oder 4, in dem die durch Extrusion erhaltene Kunststoffolie mittels einer das Metallpulver enthaltenden Klebeschicht auf das Metallblech aufkaschiert wird.

8. Verwendung der Metall-Kunststoff-Verbunde nach Anspruch 1 bis 4 zur Herstellung von Verpackungsbehältern.

## Claims

1. Metal/plastics composite containing inorganic fillers, in which composite a thermoplastics film consisting of polyolefins, polyamides, polyesters, polyvinyl chloride, polyvinylidene chloride, polyurethanes or polycarbonates and bonded to a metal sheet of a thickness from 0.04 to 1 mm contains at least 0.1% by weight, preferably 0.5 to 6% by weight, based on the total weight of the mixture of thermoplastics and filler, of one or more metal powders, selected from aluminium powder, magnesium powder, zinc powder and manganese powder.

2. Metal/plastics composite containing inorganic fillers, in which composite an adhesion promoter layer bonding a thermoplastics film consisting of polyolefins, polyamides, polyesters, polyvinyl chloride, polyvinylidene chloride, polyurethanes or polycarbonates to a metal sheet of a thickness from 0.04 to 1 mm contains at least 0.1% by weight, preferably 0.5 to 6% by weight, based on the total weight of the mixture of adhesion promoter and filler, of one or more metal powders, selected from aluminium powder, magnesium powder, zinc powder and manganese powder, the adhesion promoter layer being formed by the use of copolymers, terpolymers, graft copolymers or ionomers which contain carboxyl groups or anhydride groups or groups which can be hydrolysed to carboxyl groups, or the adhesion promoter layer being formed by the use of polyurethanes.

3. Metal/plastics composite containing inorganic fillers, in which composite an adhesive layer disposed between a metal sheet of a thickness from 0.04 to 1 mm and a plastics film consisting of polyolefins, polyamides, polyesters, polyvinyl chloride, polyvinylidene chloride, polyurethanes or polycarbonates contains at least 0.1% by weight, preferably 0.5 to 6% by weight, based on the total weight of the mixture of filler and the non-volatile weight of the adhesive layer, of one or more metal powders, selected from aluminium powder, magnesium powder, zinc powder and manganese powder.

4. Metal/plastics composite according to claim 1, 2 or 3, in which the average particle size of the metal powder is in the range of 5 to 20 µm.

5. Process for producing the metal/plastics composite according to claim 1 or 4, in which either the mixture of thermoplastics and metal powder is extruded and the resulting plastics film is laminated onto the metal sheet by means of an adhesive layer or the mixture of thermoplastics and metal powder is coextruded together with an adhesion promoter, the metal sheet is heated and the plastics film is laminated onto the metal sheet.

6. Process for producing the metal/plastics composite according to claim 2 or 4, in which a thermoplastic is coextruded together with a mixture of adhesion promoter and metal powder, the metal sheet is heated and the plastics film is laminated onto the metal sheet.

7. Process for producing the metal/plastics composite according to claim 3 or 4, in which the plastics film obtained by extrusion is laminated onto the metal sheet by means of an adhesive layer, which contains the metal powder.

8. Use of the metal/plastics composites according to claims 1 to 4 for producing packaging containers.

## Revendications

1. Composite métal-matière plastique renfermant des charges inorganiques, dans lequel une feuille de matière plastique thermoplastique en polyoléfines, polyamides, polyesters, chlorure de polyvinyle, chlorure de polyvinylidène, polyuréthanes ou polycarbonates, combinée à une tôle métallique d'une épaisseur de 0,04 à 1mm, renferme au moins 0,1 % en poids, de préférence de 0,5 à 6 % en poids, par rapport au poids total du mélange de matière plastique thermoplastique et de charge, d'une ou de plusieurs poudres métalliques, choisies parmi la poudre d'aluminium, la poudre de magnésium, la poudre de zinc et la poudre de manganèse.

2. Composite métal-matière plastique renfermant des charges inorganiques, dans lequel une couche d'agent promoteur d'adhésion reliant une feuille de matière plastique thermoplastique en polyoléfines, polyamides, polyesters, chlorure de polyvinyle, chlorure de polyvinylidène, polyuréthanes ou polycarbonates, à une tôle métallique d'une épaisseur de 0,04 à 1 mm, renferme au moins 0,1 % en poids, de préférence de 0,5 à 6 % en poids, par rapport au poids total du mélange d'agent promoteur d'adhésion et de charge, d'une ou de plusieurs poudres métalliques, choisies parmi la poudre d'aluminium, la poudre de magnésium, la poudre de zinc et la poudre de manganèse, étant donné que l'on utilise, en vue de la formation de la couche d'agent promoteur d'adhésion, des copolymères, des terpolymères, des copolymères greffés ou des ionomères, qui présentent des groupements carboxyles ou des groupements anhydrides, ou des groupements qui sont hydrolysables en groupements carboxyles, ou étant donné que l'on utilise, en vue de la formation de la couche d'agent promoteur d'adhésion, des polyuréthanes.

3. Composite métal-matière plastique renfermant des charges inorganiques, dans lequel une couche adhésive disposée entre une tôle métallique d'une épaisseur de 0,04 à 1 mm et une feuille de matière plastique en polyoléfines, polyamides, polyesters, chlorure de polyvinyle, chlorure de polyvinylidène, polyuréthanes ou polycarbonates, renferme au moins 0,1 % en poids, de préférence de 0,5 à 6 % en poids, par rapport au poids total du mélange de charge et du poids de matières solides de la couche adhésive, d'une ou de plusieurs poudres métalliques, choisies parmi la poudre d'aluminium, la poudre de magnésium, la poudre de zinc et la poudre de manganèse.

4. Composite métal-matière plastique selon la revendication 1, 2 ou 3, dans lequel la grandeur moyenne de particules de la poudre métallique se situe dans le domaine de 5 à 20 microns.

5. Procédé de fabrication du composite métal-matière plastique selon la revendication 1 ou 4, dans lequel soit on procède à l'extrusion du mélange de matière plastique thermoplastique et de poudre métallique et au contrecollage de la feuille de matière plastique obtenue à l'aide d'une couche adhésive sur la tôle métallique, soit on procède à la co-extrusion du mélange de matière plastique thermoplastique et de poudre métallique conjointement à un agent promoteur d'adhésion, au chauffage de la tôle métallique et au laminage de la feuille de matière plastique sur la tôle métallique.

6. Procédé de fabrication du composite métal-matière plastique selon la revendication 2 ou 4, dans lequel on procède à la co-extrusion d'une matière plastique thermoplastique conjointement à un mélange d'agent promoteur d'adhésion et de poudre métallique, au chauffage de la tôle métallique et au laminage de la feuille de matière plastique sur la tôle métallique.

7. Procédé de fabrication du composite métal-matière plastique selon la revendication 3 ou 4, dans lequel on procède, à l'aide d'une couche adhésive renfermant de la poudre métallique, sur la tôle métallique, au contrecollage de la feuille de matière plastique obtenue par extrusion.

8. Utilisation du composite métal-matière plastique selon la revendication 1 à 4 en vue de la fabrication de récipients d'empaquetage.
